# EUROPEAN PATENT SPECIFICATION

(11) **EP 4 358 503 B1**
(45) Date of publication and mention of the grant of the patent: **25.02.2026**
(21) Application number: 22824254.1
(22) Date of filing: 15.06.2022
(51) Int. Cl.: H04M 1/02, H04M 1/72484, H04M 1/72448

(54) **CONTROL METHOD AND APPARATUS FOR ELECTRONIC DEVICE, AND ELECTRONIC DEVICE AND READABLE STORAGE MEDIUM**
STEUERUNGSVERFAHREN UND -VORRICHTUNG FÜR ELEKTRONISCHE VORRICHTUNG SOWIE ELEKTRONISCHE VORRICHTUNG UND LESBARES SPEICHERMEDIUM
PROCÉDÉ ET APPAREIL DE COMMANDE POUR DISPOSITIF ÉLECTRONIQUE, ET DISPOSITIF ÉLECTRONIQUE ET SUPPORT DE STOCKAGE LISIBLE

(30) Priority: 17.06.2021 CN 202110674764
(43) Date of publication of application: 24.04.2024
(73) Proprietor: Vivo Mobile Communication Co., Ltd., Dongguan, Guangdong 523863 (CN)
(72) Inventor: WU, Zhiwen, Dongguan, Guangdong 523863 (CN)
(74) Representative: Lavoix
(86) International application number: PCT/CN2022/098979
(87) International publication number: WO 2022/262779

(56) References cited:
- CN-A- 107 786 740
- CN-A- 107 835 321
- CN-A- 108 449 489
- CN-A- 113 422 872
- US-A1- 2010 015 992
- US-A1- 2010 167 791
- US-B1- 6 643 528

## Description

### TECHNICAL FIELD

The application pertains to the technical field of electronic devices, and particularly relates to a control method and apparatus applied to an electronic device, an electronic device, and a readable storage medium.

### TECHNICAL BACKGROUND

Electronic devices with extendable screens can meet the needs of users to switch screen sizes freely, such as rollable screen smartphones. The rollable screen smartphone uses a roller bearing to enable the screen to always move along the central axis. With the help of the roller structure, the screen can be controlled to smoothly slide out or retract from one side of the device to achieve extendability.

When a rollable screen smartphone switches between the extended state and retracted state, the rollable screen is triggered to extend or retract by double-pressing the power button or sliding up and down on the touchscreen. However, this trigger method has the following shortcomings in some scenarios:
(1) If the user receives an incoming call when the rollable screen is in extended state, the large size of the extended screen makes it difficult for the user to hold the phone with one hand. Moreover, the off-centered positions of the receiver and microphone of the phone when the screen is extended make it difficult for the user to align to the microphone and receiver of the mobile phone when answering a call, resulting in poor user experience.
(2) When a call request is received, if the user tries to retract the rollable screen in extended state by pressing the power button before answering the call, the operation is cumbersome and time-consuming. Moreover, there is a possibility of accidentally triggering the power button to hang up the call, seriously affecting user experience.

US2010167791A1 discloses a portable terminal having a flexible display. When detecting an entertainment key for a film, a game, a navigation and a DMB, the flexible display disposed inside a body is slid to a vertical direction of a main display to have an extended screen. On the other hand, when detecting an incoming call or dropping of the portable terminal in a state that the flexible display has been extended, the flexible display is restored to an initial state. This may allow a user to more conveniently appreciate various entertainments such as films, games, navigations, and DMB, and may effectively prevent damage of the portable terminal.

US2010015992A1 discloses a method for automatic physical configuration of mobile communication device. A triggering event relating to a function of the mobile communication device is detected. Based on detection, the physical configuration of the mobile communication device is automatically adjusted. A database associating triggering events with physical configurations, in accordance with a predefined policy, may be retrieved. The detected triggering event may be correlated to a particular physical configuration within the database to implement automatic adjustment of the physical configuration of the mobile communication device.

### SUMMARY

One of the objectives of the embodiments of this application is to provide a control method, an electronic device, a readable storage medium, a chip and a computer program product as defined in the appended set of claims, which can solve the problem of poor user experience when the electronic device with an extendable screen extended receives an incoming call.

In the embodiments of the application, when a call request is received, instead of displaying a call request prompt interface, an extension state of the extendable screen is determined first; and if the extendable screen is in extended state, the extendable screen is controlled to retract to the target size, and the prompt information of the call request is output for the user to answer the call after the screen is retracted. In this way, the electronic device with the reduced screen size can be held by the user with one hand, making it easier for the user to answer the call. Additionally, the screen retraction does not require manual operation, which is convenient and quick, and can avoid accidental triggers that are easily caused by manual operation, thereby enhancing user experience.

### BRIEF DESCRIPTION OF DRAWINGS

FIG. 1 is a schematic flowchart of a control method applied to an electronic device according to an embodiment of this application;
FIG. 2A is a schematic diagram of a prompt interface in a specific example of this application;
FIG. 2B is a schematic diagram of a prompt interface in another specific example of this application;
FIG. 2C is a schematic diagram of a prompt interface in still another specific example of this application;
FIG. 3 is a schematic flowchart of a control method applied to an electronic device according to a specific embodiment of this application;
FIG. 4 is a schematic diagram of a target interface in a specific embodiment of this application;
FIG. 5 is a schematic flowchart of a control method applied to an electronic device according to another specific embodiment of this application;
FIG. 6 is a schematic structural diagram of a control apparatus applied to an electronic device according to an embodiment of this application;
FIG. 7 is a schematic structural diagram of a control apparatus applied to an electronic device according to a specific embodiment of this application;
FIG. 8 is a schematic diagram of a hardware structure of an electronic device according to an embodiment of this application; and
FIG. 9 is a schematic diagram of a hardware structure of an electronic device according to a specific embodiment of this application.

### DESCRIPTION OF EMBODIMENTS

The technical solutions in the embodiments of this application will be described clearly and completely in the following in conjunction with the accompanying drawings in the embodiments of this application, and it is obvious that the described embodiments are a part of the embodiments of this application, not all of the embodiments.

The terms "first", "second", and the like in the specification and claims of this application are used for distinguishing similar objects and are not used to describe a particular order or sequence. It should be understood that data used in this way is used interchangeably in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

The following specifically describes the control method applied to an electronic device provided in the embodiments of this application through specific embodiments and application scenarios thereof with reference to the accompanying drawings.

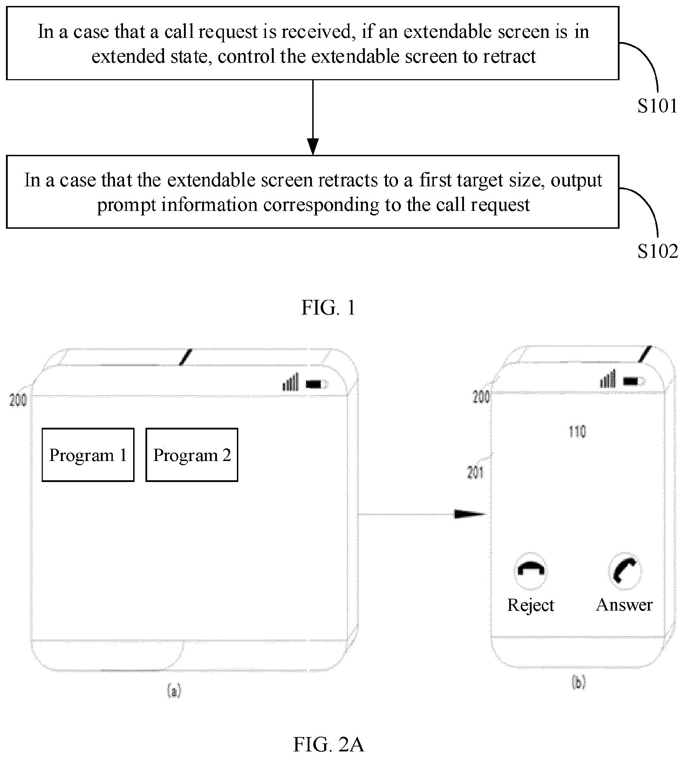

FIG. 1 is a schematic flowchart of a control method applied to an electronic device according to an embodiment of this application.

As shown in FIG. 1, the method is applied to an electronic device having an extendable screen, and the method includes steps S101 and S102.

S101: In a case that a call request is received, if the extendable screen is in extended state, control the extendable screen to retract.

In this embodiment, the call request may include a voice call request and a video call request. The call request may be a call request transmitted over a circuit-switched network, such as an incoming call from a mobile phone or an incoming call from a fixed line phone; or may be a call request transmitted over the internet, such as a voice chat request or video chat request from a social application.

The extendable screen may include an initial portion of the screen of the electronic device, as well as a portion of the screen that can be extended and retracted based on the initial portion of the screen. For example, the extendable screen may be a rollable screen. The rollable screen moves around a central axis (that is, a reel) of the screen via an internal roller bearing disposed inside the electronic device, allowing the portion of the screen wound around the central axis on one side of the electronic device to slide out or retract, achieving extendability of the screen. Alternatively, the extendable screen may include separate main and extendable screens, disposed in layers on the electronic device. For example, the extendable screen may be disposed behind the main screen with an elevating structure, able to be raised to one end of the main screen and lowered back to its original position behind the main screen. Alternatively, the extendable screen may include a push-pull screen composed of a main screen and a secondary screen. The secondary screen is divided into two parts respectively disposed on two sides of the main screen. The two parts of the secondary screen may be disposed behind the main screen and respectively moved to two sides of the main screen through a push-pull structure, thus expanding the overall display area. The extendable screen may alternatively be an electronic screen with extendability in other structures. The embodiments of this application do not limit the specific implementation of the extendable screen.

The extended state of the extendable screen means that the portion of the screen that can be extended and retracted is extended based on the initial portion of the screen of the electronic device, expanding the display area of the electronic device. When extended, the portion of the screen that can be extended and retracted may be fully or partially extended.

Taking a rollable screen for example, the rollable screen of an electronic device is in a first preset size in initial state (that is, a state in which the screen wound around the reel is not extended), which is an unextended state. When the rollable screen is rolled out beyond the first preset size, it is in an extended state. When the screen wound around the reel is fully extended, the rollable screen reaches its maximum size and is in a fully extended state.

The extendable screen retracts, that is, the portion of the extendable screen that can be extended and retracted is retracted from the extended state. For example, the rollable screen retracting from the extended state means that the extended portion of the screen is retracted and rolled up, and the push-pull screen retracting from the extended state means that the secondary screen is retracted from two sides of the main screen and moved back to behind the main screen.

In some optional embodiments, when the electronic device receives a call request, instead of playing a prompt ringtone or displaying an interface, the electronic device may first determine an extension state of the extendable screen, so as to determine a subsequent action based on the extension state of the screen. If it is determined that the extendable screen is in extended state, the electronic device first controls the screen to retract, and then plays a prompt ringtone or displays an interface after the screen is retracted.

S102: In a case that the extendable screen retracts to a first target size, output prompt information corresponding to the call request.

For example, referring to FIG. 2A, after it is determined that the extendable screen of the electronic device 200 is in the extended state shown in (a) of FIG. 2A in step S101, the extendable screen is controlled to retract to a first target size shown in (b) of FIG. 2A, where the first target size is smaller than a corresponding screen size before the call request is received.

The first target size may be the screen size in the unextended state as described above, making it easier for the user to hold the phone for subsequent operations.

The first target size may alternatively be slightly larger than the screen size in the unextended state, but smaller than the screen size before the call request is received. This allows the user to hold the phone conveniently when answering a call, and also satisfies the need of some users to keep a larger screen for operations on the electronic device.

After the screen is reduced to the first target size, the prompt information corresponding to the call request is output, where the prompt information may be a prompt tone or a prompt interface.

For example, the outputting prompt information corresponding to the call request may include one or all of the following:
displaying a prompt interface corresponding to the call request on the extendable screen; and
playing a prompt tone corresponding to the call request through a speaker of the electronic device.

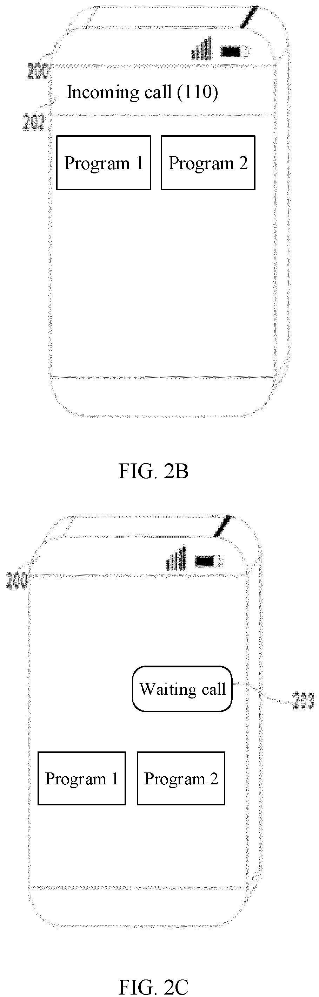

For example, as shown in FIG. 2A, the prompt interface of the electronic device 200 may be an incoming call interface 201 in full screen as shown in (b) of FIG. 2A, or an incoming call banner interface 202 displayed in a pop-up window at the top of the electronic device 200 as shown in FIG. 2B, or a call interface displayed in a floating window 203 on the screen as shown in FIG. 2C.

In this embodiment, after the size of the extendable screen of the electronic device is reduced through step S101, the prompt interface corresponding to the call request is then displayed for the user to answer or reject the call. In this way, the electronic device with the reduced screen size can be held by the user with one hand, facilitating call answering by the user. Additionally, the screen retraction does not require manual operation, which is convenient and quick, and can avoid accidental triggers that are easily caused by manual operation, thereby enhancing user experience.

The step S101 of in a case that a call request is received, if the extendable screen is in extended state, controlling the extendable screen to retract may specifically include:
in a case that the call request is received, if the extendable screen is in extended state, controlling the extendable screen to retract at a first preset speed, where the first preset speed is greater than a retraction speed at which the extendable screen retracts when manually triggered.

In some optional embodiments, the first preset speed may be preset through a speed setup interface, so that in a case that the electronic device receives a call request and the extendable screen is in extended state, the extendable screen is quickly retracted. This is faster than the screen retraction manually triggered, reducing the time required to retract the screen.

Typically, manually triggering the extendable screen to retract on the electronic device may be implemented by double-pressing the power button of the electronic device or sliding on the screen. In this embodiment, after a call request is received, a screen state is automatically detected, and the screen in extended state is quickly retracted. Compared to manual control, the method in this embodiment is faster, reduces user operations, and avoids accidental triggers caused by manually retracting the screen.

The first preset speed may be set by setting the time required for the screen to retract from the extended state to the first target size on a setup interface. A shorter time required means a faster retraction speed.

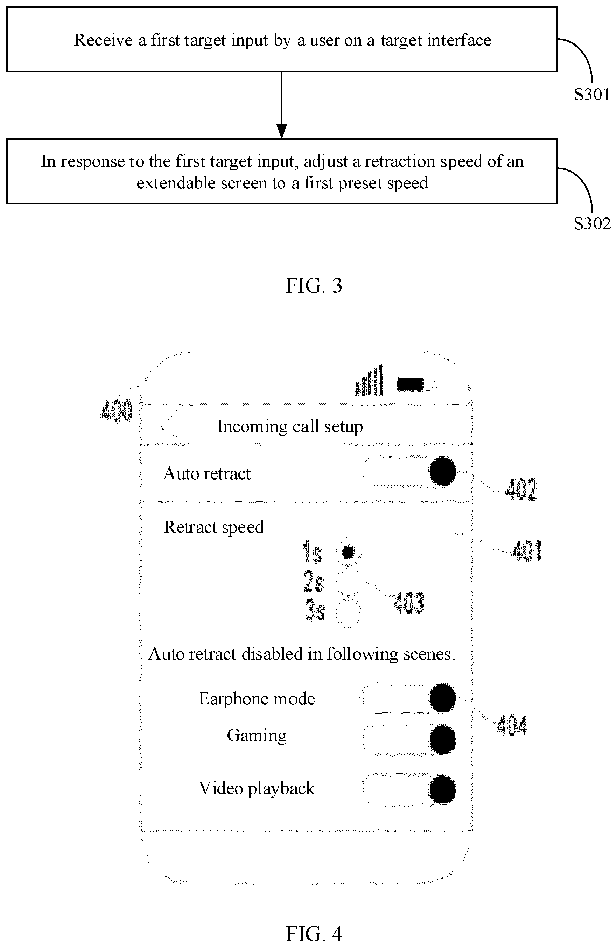

In an optional embodiment of this application, before step S101, the control method applied to an electronic device may further include steps S301 and S302, as shown in FIG. 3.

S301: Receive a first target input by a user on a target interface.

S302: In response to the first target input, adjust a retraction speed of the extendable screen to a first preset speed.

The first target input may be a tap input by the user on the target interface, or a voice instruction input by the user, or a specific gesture or air gesture input by the user, which may be specifically determined according to actual use requirements.

The tap input may be a single-tap input, a double-tap input, or an input of any number of taps, or may be a long-tap input or a short-tap input. The specific gesture may be any one of a tap gesture, a double-tap gesture, a slide gesture, a drag gesture, a pinch and stretch gesture, and a rotate gesture.

For example, the target interface may be an incoming call setup interface 401 of the electronic device 400 shown in FIG. 4, for setting whether to retract the screen when a call request is received, and at which speed the screen retracts.

For example, a first control 402 may be arranged in the target interface 401 to control whether to retract the screen when the electronic device receives a call request. Additionally, a retraction speed of the screen is set through a second control 403. In this example, the retraction speed of the screen is determined by setting the time required for the screen in extended state to reach the first target size of the screen.

In this embodiment, setting the screen retraction speed via the second control 403 is done on the premise that the screen can be safely and reliably retracted. This prevents an excessively fast speed from damaging the screen, and also prevents an excessively slow speed from affecting user experience.

For example, the first control 402 may be a toggle switches. The second control 403 may be a tab control. Through the tab control, multiple screen retraction speed values are available for the user to choose. This custom setting of screen retraction speed levels allows for quick response to different scenario requirements, thereby enhancing user experience. In this example, three speed values are provided: 1s, 2s, and 3s. The default value is 2s, that is, the time required for the screen to go from the extended state to the first target size after a call request is received is 2 seconds. When there is a higher requirement for the response time to retract the screen in an incoming call scenario, the speed level of 1s can be selected. In this way, the needs of different users for retracting the screen in different scenarios can be satisfied.

In a case that the electronic device 400 is set through the first control 401 to retract the screen when a call request is received, the corresponding retraction speed value can be selected through the second control 403, so as to determine the retraction speed of the screen when a call request is received.

In a case that a call request is received, the electronic device may sometimes be in a scenario where it is unnecessary or inconvenient to retract the screen, for example, in a scenario of the electronic device being connected to an earphone, in which case a call can be answered through the earphone without requiring the electronic device to retract the screen. Therefore, in an optional embodiment, before the controlling the extendable screen to retract, the method further includes step S103.

S103: In a case that the call request is received, obtain a running state of the electronic device.

Correspondingly, the if the extendable screen is in extended state, controlling the extendable screen to retract may specifically include:
if the extendable screen is in extended state and the running state of the electronic device does not satisfy a first preset condition, controlling the extendable screen to retract.

Optionally, before the device displays a call prompt interface and plays a prompt tone, the running state of the electronic device needs to be determined. The running state of the electronic device is determined so as to determine whether the electronic device satisfies a running state specified in the first preset condition. The extendable screen is controlled to retract, only when the extendable screen is in extended state and the running state of the electronic device does not satisfy the first preset condition. This can avoid inconvenience to users caused by unnecessary retraction in some specific scenarios.

For example, the first preset condition includes at least one of the following:
the electronic device is connected to an external device, where the external device may include an earphone, a speaker, and the like; and
the extendable screen displays a running interface of a preset application, where the preset application includes a video application and a game application.

In this example, the running state of the electronic device does not satisfy the first preset condition, meaning that the electronic device is not connected to an external device or the electronic device is not running a video application or a game application.

In a case that the electronic device is connected to an external device such as a wired earphone or a speaker, extending or retracting the extendable screen may affect the relative position of related hardware (such as the earphone jack). Therefore, it is inconvenient to retract the screen when the electronic device is connected to peripherals. In a case that the electronic device is connected to a wireless peripheral (for example, a Bluetooth earphone), the user can conveniently answer a call (via the wireless peripheral) without retracting the screen. When the electronic device is running a video or game app (application), the user may prefer to keep the screen in extended state. To satisfy these user needs, in this example, the first preset condition may be preset to determine whether to retract the screen when a call request is received and the extendable screen is in extended state.

Optionally, before step S101, the control method applied to an electronic device may further include steps S303 and S304.

S303: Receive a second target input by a user on a target interface.

The second target input may be a tap input by the user on the target interface, or a voice instruction input by the user, or a specific gesture or air gesture input by the user, which may be specifically determined according to actual use requirements.

The tap input may be a single-tap input, a double-tap input, or an input of any number of taps, or may be a long-tap input or a short-tap input. The specific gesture may be any one of a tap gesture, a double-tap gesture, a slide gesture, a drag gesture, a pinch and stretch gesture, and a rotate gesture.

S304: In response to the second target input, adjust a retraction condition of the extendable screen to a first preset condition.

For example, referring to FIG. 4, a third control 404 on the target interface 401 may be used to control an application scenario under which the electronic device 400 does not retract the screen when a call request is received. For example, when an incoming call is received in earphone mode or when the sound is played through a speaker, the screen does not need to be retracted, and the call can be answered directly using the earphone or speaker. For another example, when an incoming call is received in gaming or video playback scenarios, the screen is not retracted to avoid affecting the gaming or watching experience of the user.

After the first preset condition is set, for a scenario that does not satisfy the first preset condition, the electronic device can output prompt information after receiving the call request and retracting the screen. For a scenario that satisfies the first preset condition, the electronic device may keep the screen still in a state before the call request is received, and directly output the prompt information.

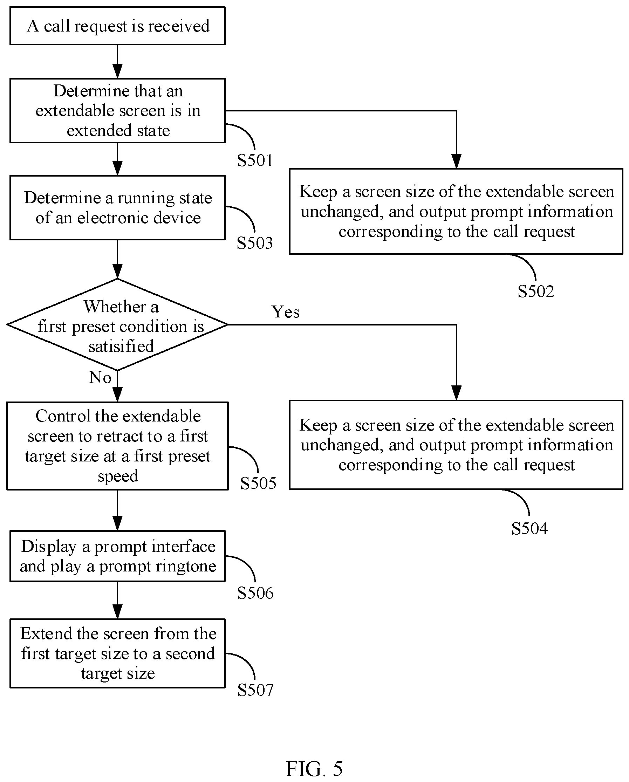

In some optional embodiments, after the screen retraction speed (that is, the first preset speed) and the first preset condition have been set on the target interface, the control method applied to an electronic device in this embodiment may specifically include the following steps, as shown in FIG. 5.

S501: In a case that a call request is received, determine an extension state of the extendable screen.

When the call request is received, instead of playing a call prompt ringtone (or a prompt tone) or displaying a prompt interface, the extension state of the extendable screen is determined.

When the extendable screen is in an unextended state in which the screen size is a first preset size, S502 is performed; when the extendable screen is in an extended state in which the screen size exceeds the first preset size, S503 is performed.

S502: When the extendable screen is in unextended state, keep the screen size of the extendable screen unchanged, and output prompt information corresponding to the call request.

In a case that the call request is received and the extendable screen is in unextended state, there is no need to retract the screen. Therefore, the screen size of the extendable screen is kept unchanged, the prompt interface corresponding to the call request is displayed, and the corresponding prompt ringtone is played.

S503: In a case that the call request is received, determine a running state of the electronic device.

In this embodiment, before the device displays a call prompt interface and plays a prompt tone, the running state of the electronic device needs to be determined. Determining the running state of the electronic device is to determine whether the electronic device satisfies a state specified in the first preset condition, for example, determining whether the electronic device is connected to an external earphone, is in a gaming app running scenario, or is in a video playback scenario. In a case that the electronic device satisfies the state specified in the first preset condition, step S504 may be performed; in a case that the electronic device does not satisfy the first preset condition, step S505 is performed.

S504: In a case that the extendable screen is in extended state and the running state of the electronic device satisfies the first preset condition, keep the screen size of the extendable screen unchanged and output the prompt information corresponding to the call request.

In this step, after the call request is received, if the screen is in extended state but the electronic device is in earphone mode or in a gaming or video playback scenario where the user does not want to be interrupted by a call, the screen size of the extendable screen is maintained unchanged. In the current screen state, the prompt ringtone is played and the call prompt interface is displayed, allowing the user to choose whether to answer or reject (that is, hang up) the call on the prompt interface.

S505: When the extendable screen is in extended state and the running state of the electronic device does not satisfy the first preset condition, control the extendable screen to retract to a first target size at a first preset speed.

When the extendable screen is in extended state and the electronic device is not in a scenario specified in the first preset condition, the extendable screen may be retracted. The screen is retracted quickly to the first target size at the first preset speed greater than a speed at which the screen retracts when manually triggered. This allows the user to hold the device conveniently and align to the microphone of the device for speaking.

S506: On the extendable screen retracted to the first target size, display a prompt interface corresponding to the call request, and play a prompt ringtone.

After the screen retracts to the first target size, the prompt interface corresponding to the call request may be displayed on the screen, and the prompt ringtone may be played through the speaker of the device. The user may operate based on the prompt interface to trigger step S507.

S507: Receive a response input for the call request from a user; and
in a case that the response input is to reject a call corresponding to the call request, extend the extendable screen from the first target size to a second target size; or
in a case that the response input is to answer a call corresponding to the call request, extend the extendable screen from the first target size to a second target size after the call ends; where the second target size is a screen size of the extendable screen before the call request is received.

The user may choose to reject or answer the call on the prompt interface corresponding to the call request. The device background continuously monitors whether the electronic device is ringing and whether the call has ended; and if the electronic device is still ringing or the call has not ended, maintains process polling, and waits for the ringing and the call to end.

After the ringing or the call ends, the extendable screen is extended from the first target size to the screen size corresponding to the extendable screen before the call request is received, and the screen is automatically controlled to return to the extended state, allowing the user to continue with the application operation in the scenario before the call request is received.

The method provided in the embodiments of this application can be used to control an electronic device having an extendable screen such as a rollable screen, so that when a call request is received, if the screen is in extended state and the application scenario of the device does not satisfy the preset condition, the device retracts the screen quickly, allowing the user to answer the call after the screen size is reduced. This enables the user to hold the electronic device conveniently and ensures that the user voice is directed towards the microphone of the device. The retraction process does not require manual operation and is completed in a short time, avoiding delay in answering calls, and delivering a good user experience.

It should be noted that the control method applied to an electronic device provided in the embodiments of this application may be performed by a control apparatus applied to an electronic device or a function module for performing the control method applied to an electronic device in the control apparatus applied to an electronic device. In the embodiments of this application, the control apparatus applied to an electronic device provided in the embodiments of this application is described by using an example in which a control apparatus applied to an electronic device performs the control method applied to an electronic device.

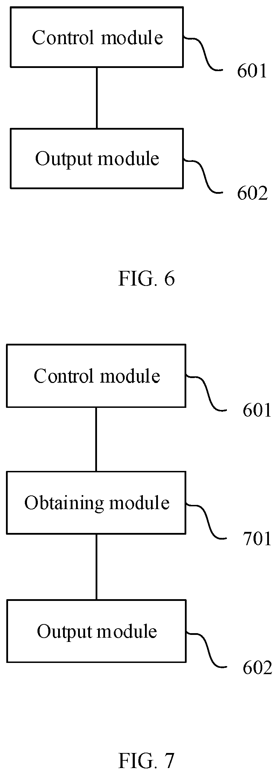

FIG. 6 is a schematic structural diagram of a control apparatus applied to an electronic device according to an embodiment of this application.

As shown in FIG. 6, the control apparatus applied to an electronic device can be applied to an electronic device having an extendable screen, and the apparatus includes:
a control module 601 configured to: in a case that a call request is received, if the extendable screen is in extended state, control the extendable screen to retract; and
an output module 602 configured to: in a case that the extendable screen retracts to a first target size, output prompt information corresponding to the call request.

In this embodiment, the call request received by the control module 601 may include a voice call request and a video call request. The call request may be a call request transmitted over a circuit-switched network, such as an incoming call from a mobile phone or an incoming call from a fixed line phone; or may be a call request transmitted over the internet, such as a voice chat request or video chat request from a social application.

The extendable screen may include an initial portion of the screen of the electronic device, as well as a portion of the screen that can be extended and retracted based on the initial portion of the screen. For example, the extendable screen may be a rollable screen. The rollable screen moves around a central axis (that is, a reel) of the screen via an internal roller bearing disposed inside the electronic device, allowing the portion of the screen wound around the central axis on one side of the electronic device to slide out or retract, achieving extendability of the screen. Alternatively, the extendable screen may include separate main and extendable screens, disposed in layers on the electronic device. For example, the extendable screen may be disposed behind the main screen with an elevating structure, able to be raised to one end of the main screen and lowered back to its original position behind the main screen. Alternatively, the extendable screen may include a push-pull screen composed of a main screen and a secondary screen. The secondary screen is divided into two parts respectively disposed on two sides of the main screen. The two parts of the secondary screen may be disposed behind the main screen and respectively moved to two sides of the main screen through a push-pull structure, thus expanding the overall display area. The extendable screen may alternatively be an electronic screen with extendability in other structures, and the embodiments of this application do not limit the specific implementation of the extendable screen.

The extended state of the extendable screen means that the portion of the screen that can be extended and retracted is extended based on the initial portion of the screen of the electronic device, expanding the display area of the electronic device. When extended, the portion of the screen that can be extended and retracted may be fully or partially extended.

Taking a rollable screen for example, the rollable screen of an electronic device is in a first preset size in initial state (that is, a state in which the screen wound around the reel is not extended), which is an unextended state. When the rollable screen is rolled out beyond the first preset size, it is in an extended state. When the screen wound around the reel is fully extended, the rollable screen reaches its maximum size and is in a fully extended state.

The extendable screen retracts, that is, the portion of the extendable screen that can be extended and retracted is retracted from the extended state. For example, the rollable screen retracting from the extended state means that the extended portion of the screen is retracted and rolled up, and the push-pull screen retracting from the extended state means that the secondary screen is retracted from two sides of the main screen and moved back to behind the main screen.

In some optional embodiments, when the electronic device receives the call request, instead of playing a prompt ringtone or displaying an interface, the control module 601 may first determine an extension state of the extendable screen, so as to determine a subsequent action based on the screen extension state. If it is determined that the extendable screen is in extended state, the screen is first controlled to retract.

After the extendable screen is reduced to the first target size, the output module 602 outputs the prompt information corresponding to the call request, where the prompt information may be a prompt tone or a prompt interface.

In this embodiment, after the control module 601 reduces the size of the extendable screen, the output module 602 displays the prompt interface corresponding to the call request for the user to answer or reject the call. In this way, the electronic device with the reduced screen size can be held by the user with one hand, making it easier for the user to answer the call. Additionally, the screen retraction does not require manual operation, which is convenient and quick, and can avoid accidental triggers that are easily caused by manual operation, thereby enhancing user experience.

The control module 601 is specifically configured to:
in a case that the call request is received, if the extendable screen is in extended state, control the extendable screen to retract at a first preset speed, where the first preset speed is greater than a retraction speed at which the extendable screen retracts when manually triggered.

In this optional example, the first preset speed may be preset through a speed setup interface, so that when the electronic device receives a call request and the extendable screen is in extended state, the extendable screen is quickly retracted. This is faster than the screen retraction triggered manually, reducing the time required to retract the screen.

Optionally, as shown in FIG. 7, the apparatus may further include:
an obtaining module 701 configured to: in the case that a call request is received, obtain a running state of the electronic device; and
the control module 601 is specifically configured to: if the extendable screen is in extended state and the running state of the electronic device does not satisfy a first preset condition, control the extendable screen to retract.

The first preset condition includes at least one of the following:
the electronic device is connected to an external device, where the external device may include an earphone, a speaker, and the like; and
the extendable screen displays a running interface of a preset application, where the preset application includes a video application and a game application.

In this example, the running state of the electronic device does not satisfy the first preset condition, meaning that the electronic device is not connected to an external device or the electronic device is not running a video application or a game application.

In a case that the electronic device is connected to an external device such as a wired earphone or a speaker, extending or retracting the extendable screen may affect the relative position of related hardware (such as the earphone jack). Therefore, it is inconvenient to retract the screen when the electronic device is connected to peripherals. In a case that the electronic device is connected to a wireless peripheral (for example, a Bluetooth earphone), the user can conveniently answer a call (via the wireless peripheral) without retracting the screen. When the electronic device is running a video or game app (application), the user may prefer to keep the screen in extended state. To satisfy these user needs, in this example, the first preset condition may be preset to determine whether to retract the screen when a call request is received and the extendable screen is in extended state.

In this example, for a scenario that does not satisfy the first preset condition, the electronic device may output prompt information after receiving the call request and retracting the screen. For a scenario that satisfies the first preset condition, the electronic device may keep the screen still in a state before the call request is received, and directly output the prompt information.

Optionally, the control apparatus applied to an electronic device of this application may further include:
a receiving module configured to receive a response input for the call request from a user; and
an extension module configured to: in a case that the response input is to reject a call corresponding to the call request, extend the extendable screen from the first target size to a second target size; or
the extension module configured to: in a case that the response input is to answer a call corresponding to the call request, extend the extendable screen from the first target size to a second target size after the call ends; where the second target size is a screen size of the extendable screen before the call request is received.

The receiving module may receive, on the prompt interface corresponding to the call request, a response input operation of rejecting the call or answering the call by the user.

The extension module continuously monitors whether the electronic device is ringing and whether the call has ended; and if the electronic device is still ringing or the call has not ended, maintains process polling, and waits for the ringing and the call to end.

After the ringing or the call ends, the extension module extends the extendable screen from the first target size to the screen size corresponding to the extendable screen before the call request is received, and automatically controls the screen to return to the extended state, allowing the user to continue with the application operation in the scenario before the call request is received.

The embodiment of this application can be used to control an electronic device having an extendable screen such as a rollable screen, so that when the device receives a call request, if the screen is in extended state and the application scenario of the device does not satisfy the preset condition, the screen is quickly retracted, allowing the user to answer the call after the screen size is reduced. This enables the user to hold the device conveniently and ensures that the user voice is directed towards the microphone of the device. The retraction process does not require manual operation and is completed in a short time, avoiding delay in answering calls, and delivering a good user experience.

The control apparatus applied to an electronic device in the embodiment of this application may be an apparatus or may be a component, an integrated circuit, or a chip in a terminal. The apparatus may be a mobile electronic device. For example, the mobile electronic device may be a mobile phone, a tablet computer, a palmtop computer, a wearable device, or the like, which is not specifically limited in the embodiments of this application.

The control apparatus applied to an electronic device in the embodiments of this application may be an apparatus having an operating system. The operating system may be an android (Android) operating system, iOS operating system, or other possible operating systems. This is not specifically limited in the embodiments of this application.

The control apparatus applied to an electronic device provided in the embodiments of this application can implement the processes implemented in the method embodiments in FIG. 1 to FIG. 5. To avoid repetition, details are not described herein again.

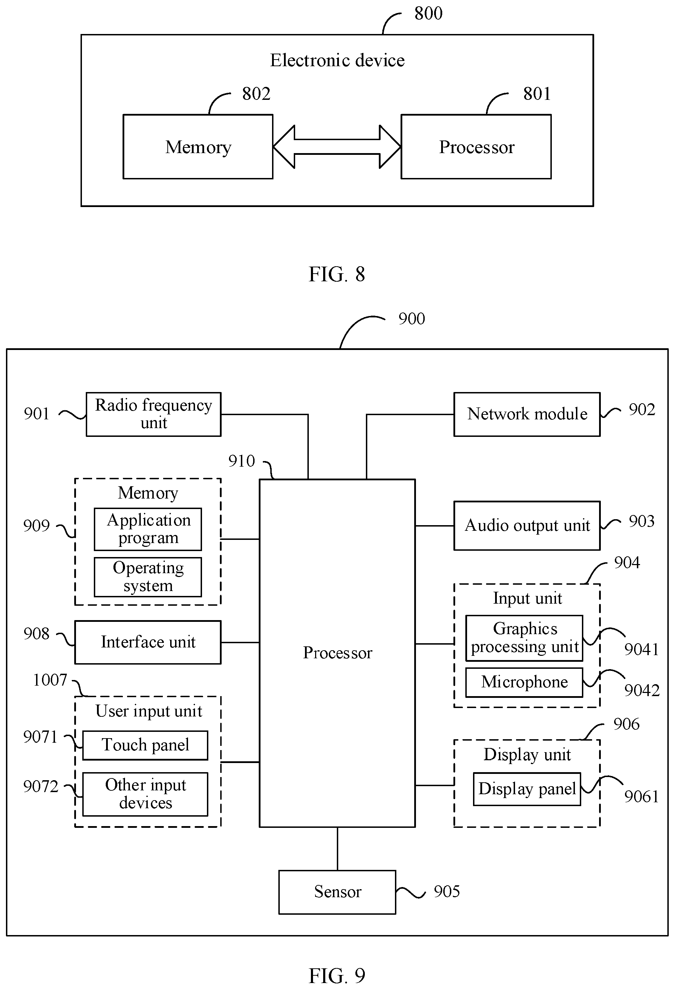

Optionally, as shown in FIG. 8, an embodiment of this application further provides an electronic device 800, where the electronic device 800 has an extendable screen, and the electronic device 800 further includes a processor 801, a memory 802, and a program or an instruction stored in the memory 802 and capable of running on the processor 801. When the program or the instruction is executed by the processor 801, the processes of the embodiments of the foregoing control method applied to an electronic device are implemented, with the same technical effects achieved. To avoid repetition, details are not described herein again.

It should be noted that the electronic device in this embodiment of this application includes the above-mentioned mobile electronic device.

FIG. 9 is a schematic diagram of a hardware structure of an electronic device according to an embodiment of this application.

The electronic device 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

The screen unit 906 may include an extendable flexible display panel 9061. The flexible display panel 9061 may be configured in a form of a liquid crystal display, an organic light-emitting diode display, or the like. The extendable flexible display panel 9061 may include a reel structure. A drive shaft connected to the reel outputs power signals constantly to stably control a roller bearing so that the panel moves along a central axis. With the help of the roller structure, the screen is controlled to smoothly slide out or retract from one side of the device to achieve extendability.

Correspondingly, the user input unit 907 may include an extendable touch panel 9071 that matches the extendable flexible display panel 9061, and other input devices 9072. The extendable touch panel 9071 is also referred to as an extendable touchscreen. The touch panel 9071 may include two parts: a touch detection apparatus and a touch controller. The other input devices 9072 may include but are not limited to a physical keyboard, a functional button (such as a volume control button or a power on/off button), a trackball, a mouse, and a joystick. Details are not described herein.

Those skilled in the art can understand that the electronic device 900 may further include a power supply (for example, a battery) that supplies power to various components. The power supply may be logically connected to the processor 910 through a power management system, so that functions such as charge and discharge management and power consumption management are implemented by using the power management system. The structure of the electronic device shown in FIG. 9 does not constitute a limitation on the electronic device. The electronic device may include more or fewer components than shown in the figure, or some components may be combined, or there may be a different component layout. Details are not described herein again.

The radio frequency unit 901 is configured to receive a call request from a circuit-switched network.

The network module 902 is configured to receive a call request from the internet.

The processor 910 is configured to: in a case that a call request is received, if the extendable flexible display panel 9061 is in extended state, control the extendable flexible display panel 9061 to retract to a first target size.

The display unit 906 may be configured to: in a case that the extendable display panel 9061 retracts to the first target size, output a prompt interface corresponding to the call request.

The audio output unit 903 may be configured to output a prompt ringtone corresponding to the call request.

In the embodiment of this application, when the device receives a call request, if the screen is in extended state and the application scenario of the device does not satisfy the preset condition, the screen is quickly retracted, allowing the user to answer the call after the screen size is reduced. This enables the user to hold the device conveniently and ensures that the user voice is directed towards the receiver of the device. The retraction process does not require manual operation and is completed in a short time, avoiding delay in answering calls, and delivering a good user experience.

Optionally, the processor 910 is further configured to: when a call request is received, determine a running state of the electronic device; and if the extendable flexible display panel 9061 is in extended state and the running state of the electronic device does not satisfy a first preset condition, control the extendable flexible display panel 9061 to retract to a first target size at a first preset speed.

In this way, when the screen is in extended state but the electronic device is in earphone mode or in a game or video playback scenario where the user does not want to be interrupted by the call, the screen size of the extendable flexible display panel 9061 is maintained unchanged. In the current screen state, the prompt ringtone is played and the call prompt interface is displayed, allowing the user to choose whether to answer or reject (that is, hang up) the call on the prompt interface. When the extendable flexible display panel 9061 is in extended state and the electronic device is not in a scenario specified in the first preset condition, the extendable flexible display panel 9061 may be retracted. The extendable flexible display panel 9061 is retracted quickly to the first target size at the first preset speed greater than a speed at which the screen retracts when manually triggered. This allows the user to hold the device easily and align to the device microphone for speaking.

It should be understood that in this embodiment of this application, the input unit 904 may include a graphics processing unit (GPU) 9041 and a microphone 9042. The graphics processing unit 9041 processes image data of a static picture or a video that is obtained by an image capture apparatus (for example, a camera) in a video capture mode or an image capture mode. The memory 909 may be configured to store software programs and various data which include but are not limited to an application program and an operating system. The processor 910 may integrate an application processor and a modem processor. The application processor mainly processes an operating system, a user interface, an application program, and the like. The modem processor mainly processes wireless communication. It can be understood that the modem processor may alternatively be not integrated in the processor 910.

An embodiment of this application further provides a readable storage medium. The readable storage medium stores a program or an instruction. When the program or the instruction is executed by a processor, the processes of the embodiments of the foregoing control method applied to an electronic device are implemented, with the same technical effects achieved. To avoid repetition, details are not described herein again.

The processor is the processor in the electronic device in the foregoing embodiments. The readable storage medium includes a computer-readable storage medium such as a computer read-only memory (ROM), a random access memory (RAM), a magnetic disk, or an optical disc.

An embodiment of this application further provides a chip. The chip includes a processor and a communications interface. The communications interface is coupled to the processor. The processor is configured to run a program or an instruction to implement each process of the embodiments of the foregoing control method applied to an electronic device, with the same technical effects achieved. To avoid repetition, details are not described herein again.

The chip mentioned in the embodiment of this application may also be referred to as a system-level chip, a system chip, a chip system, a system on chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred embodiment. Based on such an understanding, the technical solutions of this application essentially or the part contributing to the related art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings.

## Claims

1. A control method, performed by an electronic device, wherein the electronic device has an extendable screen, and the method comprises:
in a case that a call request is received, if the extendable screen is in extended state, controlling (S101) the extendable screen to retract; and
in a case that the extendable screen retracts to a first target size, outputting (S102) prompt information corresponding to the call request;
**characterized in that** the controlling (S101) the extendable screen to retract comprises:
in the case that a call request is received, if the extendable screen is in extended state, controlling the extendable screen to retract at a first preset speed, wherein the first preset speed is greater than a retraction speed at which the extendable screen retracts when manually triggered.

2. The control method applied to an electronic device according to claim 1, wherein before the controlling (S101) the extendable screen to retract, the method further comprises:
in the case that a call request is received, obtaining (S103) a running state of the electronic device; and
the if the extendable screen is in extended state, controlling the extendable screen to retract specifically comprises:
if the extendable screen is in extended state and the running state of the electronic device does not satisfy a first preset condition, controlling the extendable screen to retract.

3. The control method applied to an electronic device according to claim 1, wherein before the controlling (S101) the extendable screen to retract, the method further comprises:
if the extendable screen is in extended state and a running state of the electronic device satisfies a first preset condition, keeping a screen size of the extendable screen unchanged and outputting the prompt information corresponding to the call request.

4. The control method applied to an electronic device according to claim 2, wherein the first preset condition comprises at least one of the following:
the electronic device is connected to an external device; and
the extendable screen displays a running interface of a preset application, wherein the preset application comprises a video application and a game application.

5. The control method applied to an electronic device according to claim 1, wherein after the outputting (S102) prompt information corresponding to the call request, the method further comprises:
receiving a response input for the call request from a user; and
in a case that the response input is to reject a call corresponding to the call request, extending the extendable screen from the first target size to a second target size; or
in a case that the response input is to answer a call corresponding to the call request, extending the extendable screen from the first target size to a second target size after the call ends; wherein
the second target size is a screen size of the extendable screen before the call request is received.

6. An electronic device, comprising an extendable screen and a control apparatus, wherein the control apparatus comprises:
a control module (601) configured to: in a case that a call request is received, if the extendable screen is in extended state, control the extendable screen to retract; and
an output module (602) configured to: in a case that the extendable screen retracts to a first target size, output prompt information corresponding to the call request;
**characterized in that** the control module (601) is specifically configured to:
in a case that the call request is received, if the extendable screen is in extended state, control the extendable screen to retract at a first preset speed, wherein the first preset speed is greater than a retraction speed at which the extendable screen retracts when manually triggered.

7. The electronic device according to claim 6, wherein the apparatus further comprises:
an obtaining module (701) configured to: in the case that a call request is received, obtain a running state of the electronic device; and
the control module (601) is specifically configured to: if the extendable screen is in extended state and the running state of the electronic device does not satisfy a first preset condition, control the extendable screen to retract.

8. The electronic device according to claim 7, wherein the first preset condition comprises at least one of the following:
the electronic device is connected to an external device; and
the extendable screen displays a running interface of a preset application, wherein the preset application comprises a video application and a game application.

9. The electronic device according to claim 6, wherein the apparatus further comprises:
a receiving module configured to receive a response input for the call request from a user; and
an extension module configured to: in a case that the response input is to reject a call corresponding to the call request, extend the extendable screen from the first target size to a second target size; or
in a case that the response input is to answer a call corresponding to the call request, extend the extendable screen from the first target size to a second target size after the call ends; wherein
the second target size is a screen size of the extendable screen before the call request is received.

10. A readable storage medium, wherein the readable storage medium stores a program or an instruction, and when the program or instructions is executed by a processor of an electronic device comprising an extendable screen, the steps of the control method according to any one of claims 1 to 5 are implemented.

11. A chip for an electronic device comprising an extendable screen, comprising a processor and a communications interface, the communications interface is coupled to the processor, and the processor is configured to execute a program or an instruction to implement the steps of the control method according to any one of claims 1 to 5 in an electronic device comprising an extendable screen.

12. A computer program product, wherein the program product is stored in a non-volatile storage medium, and the program product is executed by at least one processor of an electronic device comprising an extendable screen to implement the steps of the control method according to any one of claims 1 to 5.

## Patentansprüche

1. Steuerungsverfahren, das von einer elektronischen Vorrichtung durchgeführt wird, wobei die elektronische Vorrichtung einen erweiterbaren Bildschirm aufweist und das Verfahren Folgendes umfasst:
in einem Fall, dass eine Anrufanforderung empfangen wird, wenn der erweiterbare Bildschirm in dem erweiterten Zustand ist, Steuern (S101) des Einziehens des erweiterbaren Bildschirms; und
in einem Fall, dass der erweiterbare Bildschirm auf eine erste Zielgröße eingezogen wird, Ausgeben (S102) von Aufforderungsinformationen, die der Anrufanfrage entsprechen;
**dadurch gekennzeichnet, dass** die Steuerung (S101) des erweiterbaren Bildschirms zum Einziehen Folgendes umfasst:
in dem Fall, dass eine Anrufanforderung empfangen wird, wenn der erweiterbare Bildschirm in dem erweiterten Zustand ist, Steuern des erweiterbaren Bildschirms, um ihn mit einer ersten voreingestellten Geschwindigkeit einzuziehen, wobei die erste voreingestellte Geschwindigkeit größer ist als eine Einziehgeschwindigkeit, mit der der erweiterbare Bildschirm bei manueller Auslösung eingezogen wird.

2. Steuerungsverfahren für elektronische Vorrichtung nach Anspruch 1, wobei das Verfahren vor dem Steuern (S101) des Einziehens des erweiterbaren Bildschirms ferner Folgendes umfasst:
in dem Fall, dass eine Anrufanforderung empfangen wird, Erlangen (S103) eines Betriebszustands der elektronischen Vorrichtung; und
wobei, wenn der erweiterbare Bildschirm in dem erweiterten Zustand ist, das Steuern des erweiterbaren Bildschirms, um eingezogen zu werden, spezifisch Folgendes umfasst:
wenn der erweiterbare Bildschirm in dem erweiterten Zustand ist und der Betriebszustand der elektronischen Vorrichtung eine erste voreingestellte Bedingung nicht erfüllt, Steuern des erweiterbaren Bildschirms, um eingezogen zu werden.

3. Steuerungsverfahren für elektronische Vorrichtung nach Anspruch 1, wobei das Verfahren vor dem Steuern (S101) des Einziehens des erweiterbaren Bildschirms ferner Folgendes umfasst:
wenn der erweiterbare Bildschirm im erweiterten Zustand ist und ein Betriebszustand der elektronischen Vorrichtung eine erste voreingestellte Bedingung erfüllt, Beibehalten einer Bildschirmgröße des erweiterbaren Bildschirms und Ausgeben der Aufforderungsinformation, die der Anrufanforderung entspricht.

4. Steuerungsverfahren für elektronische Vorrichtung nach Anspruch 2, wobei die erste voreingestellte Bedingung mindestens eines der Folgenden umfasst:
die elektronische Vorrichtung ist mit einer externen Vorrichtung verbunden; und
der erweiterbare Bildschirm zeigt eine laufende Schnittstelle einer voreingestellten Anwendung an, wobei die voreingestellte Anwendung eine Videoanwendung und eine Spieleanwendung umfasst.

5. Steuerungsverfahren, angewendet auf eine elektronische Vorrichtung nach Anspruch 1, wobei das Verfahren nach Ausgeben (S102) von Aufforderungsinformationen, die der Anrufanforderung entsprechen, ferner Folgendes umfasst:
Empfangen einer Antworteingabe für die Anrufanfrage von einem Benutzer; und
in einem Fall, dass die Antworteingabe darin besteht, einen der Anrufanfrage entsprechenden Anruf abzulehnen, Erweitern des erweiterbaren Bildschirms von der ersten Zielgröße auf eine zweite Zielgröße; oder
in einem Fall, dass die Antworteingabe die Beantwortung eines Anrufs ist, der der Anrufanforderung entspricht, Erweitern des erweiterbaren Bildschirms von der ersten Zielgröße auf eine zweite Zielgröße, nachdem der Anruf beendet ist; wobei
die zweite Zielgröße eine Bildschirmgröße des erweiterbaren Bildschirms ist, bevor die Anrufanforderung empfangen wird.

6. Elektronische Vorrichtung, umfassend einen erweiterbaren Bildschirm und eine Steuerungsvorrichtung, wobei die Steuerungsvorrichtung Folgendes umfasst:
ein Steuermodul (601), das konfiguriert ist, um in einem Fall, das eine Anrufanforderung empfangen wird, wenn der erweiterbare Bildschirm in dem erweiterten Zustand ist, den erweiterbaren Bildschirm zu steuern, um eingezogen zu werden; und
ein Ausgabemodul (602), das zu Folgendem konfiguriert ist: in einem Fall, das der erweiterbare Bildschirm auf eine erste Zielgröße eingezogen wird, Ausgeben von Aufforderungsinformationen, die der Anrufanfrage entsprechen;
**dadurch gekennzeichnet, dass** das Steuermodul (601) spezifisch zu Folgendem konfiguriert ist:
in einem Fall, dass die Anrufanforderung empfangen wird, wenn der erweiterbare Bildschirm in dem erweiterten Zustand ist, Steuern des erweiterbaren Bildschirms, um ihn mit einer ersten voreingestellten Geschwindigkeit einzuziehen, wobei die erste voreingestellte Geschwindigkeit größer ist als eine Einziehgeschwindigkeit, mit der der erweiterbare Bildschirm bei manueller Auslösung eingezogen wird.

7. Elektronische Vorrichtung nach Anspruch 6, wobei das Gerät ferner Folgendes umfasst:
ein Erlangungsmodul (701), das zu Folgendem konfiguriert ist: in dem Fall, dass eine Anrufanforderung empfangen wird, Erlangen eines Betriebszustands der elektronischen Vorrichtung; und
das Steuermodul (601) spezifisch zu Folgendem konfiguriert ist: wenn der erweiterbare Bildschirm in dem erweiterten Zustand ist und der Betriebszustand der elektronischen Vorrichtung eine erste voreingestellte Bedingung nicht erfüllt, Steuern des erweiterbaren Bildschirms, um eingezogen zu werden.

8. Elektronische Vorrichtung nach Anspruch 7, wobei die erste voreingestellte Bedingung mindestens eines der Folgenden umfasst:
die elektronische Vorrichtung ist mit einer externen Vorrichtung verbunden; und
der erweiterbare Bildschirm zeigt eine laufende Schnittstelle einer voreingestellten Anwendung an, wobei die voreingestellte Anwendung eine Videoanwendung und eine Spieleanwendung umfasst.

9. Elektronische Vorrichtung nach Anspruch 6, wobei das Gerät ferner Folgendes umfasst:
ein Empfangsmodul, das konfiguriert ist, um eine Antworteingabe für die Anrufanfrage von einem Benutzer zu empfangen; und
ein Erweiterungsmodul, das zu Folgendem konfiguriert ist: in einem Fall, dass die Antworteingabe darin besteht, einen der Anrufanfrage entsprechenden Anruf abzulehnen, Erweitern des erweiterbaren Bildschirms von der ersten Zielgröße auf eine zweite Zielgröße; oder
in einem Fall, dass die Antworteingabe die Beantwortung eines Anrufs ist, der der Anrufanforderung entspricht, Erweitern des erweiterbaren Bildschirms von der ersten Zielgröße auf eine zweite Zielgröße, nachdem der Anruf beendet ist; wobei
die zweite Zielgröße eine Bildschirmgröße des erweiterbaren Bildschirms ist, bevor die Anrufanforderung empfangen wird.

10. Lesbares Speichermedium, wobei das lesbare Speichermedium ein Programm oder eine Anweisung speichert, und wenn das Programm oder die Anweisungen von einem Prozessor einer elektronischen Vorrichtung mit einem erweiterbaren Bildschirm ausgeführt werden, die Schritte des Steuerungsverfahrens nach einem der Ansprüche 1 bis 5 implementiert werden.

11. Chip für eine elektronische Vorrichtung, umfassend einen erweiterbaren Bildschirm, umfassend einen Prozessor und eine Kommunikationsschnittstelle, wobei die Kommunikationsschnittstelle mit dem Prozessor gekoppelt ist und der Prozessor konfiguriert ist, um ein Programm oder eine Anweisen auszuführen, um die Schritte des Steuerungsverfahrens nach einem der Ansprüche 1 bis 5 in einer elektronischen Vorrichtung, umfassend einen erweiterbaren Bildschirm, zu implementieren.

12. Computerprogrammprodukt, wobei das Programmprodukt in einem nichtflüchtigen Speichermedium gespeichert ist und das Programmprodukt von mindestens einem Prozessor einer elektronischen Vorrichtung, umfassend einen erweiterbaren Bildschirm, ausgeführt wird, um die Schritte des Steuerungsverfahrens nach einem der Ansprüche 1 bis 5 zu implementieren.

## Revendications

1. Procédé de commande, réalisé par un dispositif électronique, dans lequel le dispositif électronique a un écran extensible, et le procédé comprend :
dans un cas où une demande d'appel est reçue, si l'écran extensible se trouve dans l'état déployé, la commande (S101) de la rétraction de l'écran extensible ; et
dans un cas où l'écran extensible se rétracte à une première taille cible, l'émission (S102) d'informations d'invite correspondant à la demande d'appel ;
**caractérisé en ce que** la commande (S101) de rétraction de l'écran extensible comprend :
dans le cas de la réception d'une demande d'appel, si l'écran extensible se trouve dans l'état déployé, la commande de rétraction de l'écran extensible à une première vitesse prédéfinie, dans lequel la première vitesse prédéfinie est supérieure à une vitesse de rétraction à laquelle l'écran extensible se rétracte lorsqu'il est déclenché manuellement.

2. Procédé de commande appliqué à un dispositif électronique selon la revendication 1, dans lequel avant la commande (S101) de la rétraction de l'écran extensible, le procédé comprend en outre :
dans le cas où une demande d'appel est reçue, l'obtention (S103) d'un état de fonctionnement du dispositif électronique ; et
si l'écran extensible se trouve dans l'état déployé, la commande de rétraction de l'écran extensible comprend spécifiquement :
si l'écran extensible se trouve dans l'état déployé et que l'état de fonctionnement du dispositif électronique ne satisfait pas à une première condition prédéfinie, la commande de la rétraction de l'écran extensible.

3. Procédé de commande appliqué à un dispositif électronique selon la revendication 1, dans lequel avant la commande (S101) de la rétraction de l'écran extensible, le procédé comprend en outre :
si l'écran extensible se trouve dans l'état déployé et qu'un état de fonctionnement du dispositif électronique satisfait à une première condition prédéfinie, le maintien d'une taille d'écran de l'écran extensible inchangée et l'émission des informations d'invite correspondant à la demande d'appel.

4. Procédé de commande appliqué à un dispositif électronique selon la revendication 2, dans lequel la première condition prédéfinie comprend au moins l'une des conditions suivantes :
le dispositif électronique est connecté à un dispositif externe ; et
l'écran extensible affiche une interface d'exécution d'une application prédéfinie, dans lequel l'application prédéfinie comprend une application vidéo et une application de jeu.

5. Procédé de commande appliqué à un dispositif électronique selon la revendication 1, dans lequel après l'émission (S102) d'informations d'invite correspondant à la demande d'appel, le procédé comprend en outre :
la réception d'une réponse saisie par un utilisateur à la demande d'appel ; et
dans un cas où la réponse saisie consiste à rejeter un appel correspondant à la demande d'appel, l'extension de l'écran extensible de la première taille cible à une seconde taille cible ; ou
dans un cas où la réponse saisie consiste à répondre à un appel correspondant à la demande d'appel, l'extension de l'écran extensible de la première taille cible à une seconde taille cible après la fin de l'appel ; dans lequel
la seconde taille cible est une taille d'écran de l'écran extensible avant la réception de la demande d'appel.

6. Dispositif électronique comprenant un écran extensible et un appareil de commande, dans lequel l'appareil de commande comprend :
un module de commande (601) configuré pour : dans un cas où une demande d'appel est reçue, si l'écran extensible se trouve dans l'état déployé, la commande de la rétraction de l'écran extensible ; et
un module d'émission (602) configuré pour : dans un cas où l'écran extensible se rétracte à une première taille cible, émettre des informations d'invite correspondant à la demande d'appel ;
**caractérisé en ce que** le module de commande (601) est spécifiquement configuré pour :
dans un cas de réception de la demande d'appel, si l'écran extensible se trouve dans l'état déployé, commander la rétraction de l'écran extensible à une première vitesse prédéfinie, dans lequel la première vitesse prédéfinie est supérieure à une vitesse de rétraction à laquelle l'écran extensible se rétracte lorsqu'il est déclenché manuellement.

7. Dispositif électronique selon la revendication 6, dans lequel l'appareil comprend en outre :
un module d'obtention (701) configuré pour : dans le cas où une demande d'appel est reçue, obtenir un état de fonctionnement du dispositif électronique ; et
le module de commande (601) est spécifiquement configuré pour : si l'écran extensible se trouve dans l'état déployé et que l'état de fonctionnement du dispositif électronique ne satisfait pas à une première condition prédéfinie, commander la rétraction de l'écran extensible.

8. Dispositif électronique selon la revendication 7, dans lequel la première condition prédéfinie comprend au moins l'une des conditions suivantes :
le dispositif électronique est connecté à un dispositif externe ; et
l'écran extensible affiche une interface d'exécution d'une application prédéfinie, dans lequel l'application prédéfinie comprend une application vidéo et une application de jeu.

9. Dispositif électronique selon la revendication 6, dans lequel l'appareil comprend en outre :
un module de réception configuré pour recevoir une réponse saisie par un utilisateur à la demande d'appel ; et
un module d'extension configuré pour : dans un cas où la réponse saisie consiste à rejeter un appel correspondant à la demande d'appel, étendre l'écran extensible de la première taille cible à une seconde taille cible ; ou
dans un cas où la réponse saisie consiste à répondre à un appel correspondant à la demande d'appel, étendre l'écran extensible de la première taille cible à une seconde taille cible après la fin de l'appel ; dans lequel
la seconde taille cible est une taille d'écran de l'écran extensible avant la réception de la demande d'appel.

10. Support de stockage lisible, dans lequel le support de stockage lisible stocke un programme ou des instructions, et lorsque le programme ou les instructions sont exécutés par un processeur d'un dispositif électronique comprenant un écran extensible, les étapes du procédé de commande selon l'une quelconque des revendications 1 à 5 sont mises en œuvre.

11. Puce pour un dispositif électronique comprenant un écran extensible, comprenant un processeur et une interface de communication, l'interface de communication est couplée au processeur, et le processeur est configuré pour exécuter un programme ou une instruction pour mettre en œuvre les étapes du procédé de commande selon l'une quelconque des revendications 1 à 5 dans un dispositif électronique comprenant un écran extensible.

12. Produit de programme informatique, dans lequel le produit de programme est stocké sur un support de stockage non volatile, et le produit de programme est exécuté par au moins un processeur d'un dispositif électronique comprenant un écran extensible pour mettre en œuvre les étapes du procédé de commande selon l'une quelconque des revendications 1 à 5.
